# FASCICULE DE BREVET EUROPEEN

(11) **EP 2 181 747 B1**
(45) Date de publication et mention de la délivrance du brevet: **02.01.2013**
(21) Numéro de dépôt: 09172971.5
(22) Date de dépôt: 14.10.2009
(51) Int. Cl.: B01D 35/16, B01D 36/00

(54) **Filtre a carburant avec dispositif de purge et cartouche filtrante pour un tel filtre**
Kraftstofffilter mit Ablassvorrichtung und Filterpatrone für einen solchen Filter
Fuel filter with purging device and filter cartridge for such a filter

(30) Priorité: 28.10.2008 FR 0857321
(43) Date de publication de la demande: 05.05.2010
(73) Titulaire: FILTRAUTO, 78280 Guyancourt (FR)
(72) Inventeur: Reperant, Romain, 95220 HERBLAY (FR); Lopez, Yann, 91380 CHILLY MAZARIN (FR); Lalleman, Xavier, 94200 IVRY SUR SEINE (FR)
(74) Mandataire: Cabinet Plasseraud

(56) Documents cités:
- EP-A- 0 657 198
- EP-A- 1 172 549
- EP-A- 1 277 948
- FR-A- 2 882 661
- US-A- 5 366 400

## Description

### DOMAINE TECHNIQUE DE L'INVENTION

La présente invention est relative aux filtres à carburant, et en particulier aux filtres à gazole séparant l'eau contenue dans le carburant et comportant un dispositif de purge pour évacuer cette eau.

### ARRIERE-PLAN TECHNOLOGIQUE DE L'INVENTION

Un filtre à carburant du genre précité comprend typiquement une entrée et une sortie de carburant, et permet, dans un circuit d'alimentation en gazole pour moteur diesel, de filtrer le gazole pour le débarrasser de ses impuretés et de l'eau en suspension. L'eau qui est de densité supérieure au carburant s'accumule typiquement par gravité au fond du filtre, où est prévu un orifice obturé par un bouchon.

Lorsque le filtre à carburant est monté dans un carter d'un véhicule, il faut pouvoir retirer le bouchon. L'accessibilité du bouchon est un problème qui a été résolu en proposant, comme indiqué par exemple dans le document FR 2 882 661, un filtre à carburant avec un obturateur de vidange sous la forme d'une tige pouvant être actionnée du côté supérieur du filtre.

Cette tige s'étend entre une extrémité préhensible dépassant d'un conduit de guidage du carter de filtre et une extrémité d'obturation qui pénètre dans un canal de vidange du carter. Un joint annulaire d'étanchéité supérieure est prévu sur la tige pour obtenir une étanchéité dans le conduit de guidage et un joint annulaire d'étanchéité inférieure est prévu sur l'extrémité d'obturation. La purge du filtre décrit dans le document FR 2 882 661 peut être actionnée par le dessus avec un déplacement limité de la tige de façon à ne pas altérer l'étanchéité supérieure.

Le document EP 1 172 549 décrit également un filtre muni d'une tige pour le dégagement d'un orifice de vidange. Ce genre de filtre est cependant plus complexe à assembler en raison de l'utilisation d'un élément ressort et d'un actionnement indirect de l'obturateur. Il en résulte que le prix de ce genre de filtres est considéré comme élevé.

### DESCRIPTION GENERALE DE L'INVENTION

La présente invention a pour but de proposer un filtre à carburant plus attractif en termes de coût.

A cet effet, il est proposé selon l'invention un filtre à carburant séparateur d'eau tel que défini dans la revendication 1.

Grâce à ces dispositions, le filtre à carburant est plus compact, ce qui nécessite moins de matière et réduit son prix. En outre, lors d'une opération de rechange, seule la cartouche filtrante est jetée. On peut regrouper dans une partie réutilisable correspondant au support plusieurs fonctionnalités telles que le réchauffeur, une sonde thermique et/ou le détecteur d'eau : on cumule l'avantage de l'accessibilité par le haut du filtre avec une diminution des coûts de rechange. L'intérêt de réduire la complexité de la partie jetable est également écologique.

Selon une autre particularité, la tige de purge présente trois zones d'étanchéité incluant ladite zone d'étanchéité tige-support et ladite zone d'étanchéité tige-flasque, ainsi qu'une zone d'étanchéité entre l'extrémité d'obturation de la tige de purge et un canal de purge définissant l'orifice de purge, le passage délimité par la surface de guidage étant coaxial avec le canal de purge, sur chaque zone d'étanchéité étant exercé un contact annulaire radialement vers l'intérieur. Il n'est donc pas nécessaire de solliciter axialement la tige de purge par un quelconque ressort, ce qui permet de simplifier les opérations d'assemblage lors de la fabrication du filtre à carburant.

Selon une autre particularité, le couvercle est disposé à l'opposé du fond, l'ouverture du couvercle de liaison étant entourée d'un joint d'étanchéité prévu pour rendre étanche une liaison support-couvercle et traversée par une extrémité supérieure du premier flasque, dit supérieur, et/ou une paroi tubulaire du support, en contact avec le flasque supérieur lorsque la cartouche filtrante est montée sur le support. Ainsi, l'étanchéité de l'ensemble peut être assurée ave un seul joint supplémentaire. La cartouche filtrante de rechange peut en outre être facilement montée, par exemple en insérant quelques vis de fixation dans des conduits filetés répartis autour du joint à coincer entre le couvercle de liaison et le support.

Dans des modes de réalisation préférés de l'invention, on peut éventuellement avoir recours en outre à l'une et/ou à l'autre des dispositions suivantes :
- la surface de guidage du deuxième flasque, dit inférieur, est disposée au dessus de la surface du flasque inférieur supportant le média filtrant, la tige de purge comportant un capteur d'eau disposé entre la zone d'étanchéité tige-flasque et ladite extrémité d'obturation ;
- la zone d'étanchéité tige-flasque est réalisée par une portion tronconique du deuxième flasque coopérant avec une portée cylindrique de la tige de purge, le diamètre de la portion tronconique destinée au contact avec ladite portée cylindrique étant préférentiellement inférieur ou égal au diamètre de la portée cylindrique ;
- la surface de guidage du deuxième flasque est formée d'un joint torique ou d'un joint à lèvre solidaire du flasque inférieur ;
- la tige de purge peut être déplacée suivant ladite direction d'allongement relativement au support et comprend des surfaces de butée opposées pour limiter son déplacement sur une distance déterminée, chacune des zones d'étanchéité tige-support et tige-flasque pouvant être déplacée axialement le long d'une paroi annulaire d'extension axiale au moins égale à la distance déterminée ;
- lorsque la cartouche filtrante est montée sur ledit support, une zone en aval de la filtration est séparée d'une zone en amont de la filtration, au niveau d'un contact annulaire du deuxième flasque contre un élément d'étanchéité de la tige de purge formant ladite zone d'étanchéité tige-flasque, l'élément d'étanchéité consistant préférentiellement en une portion cylindrique de la tige de purge qui s'étend entre deux élargissements de section.

Selon une particularité, le support comporte l'un au moins des composants suivants :
- sonde de température ;
- sonde de pression ;
- dispositif réchauffeur.

Par ailleurs, l'invention a également pour objet un cartouche filtrante adaptée pour coopérer dans un filtre à carburant selon l'invention.

### BREVE DESCRIPTION DES DESSINS

D'autres caractéristiques et avantages de l'invention apparaîtront au cours de la description suivante de plusieurs modes de réalisation, donnés à titre d'exemples non limitatifs, en regard des dessins joints dans lesquels :
- la figure 1 est une vue en coupe d'un filtre à carburant avec un support et une cartouche filtrante selon l'invention ;
- la figure 2 est une perspective éclatée illustrant le mode de liaison entre la cartouche et le support.

### DESCRIPTION DES MODES DE REALISATION PREFERES DE L'INVENTION

Sur les différentes figures, des références identiques indiquent des éléments identiques ou similaires.

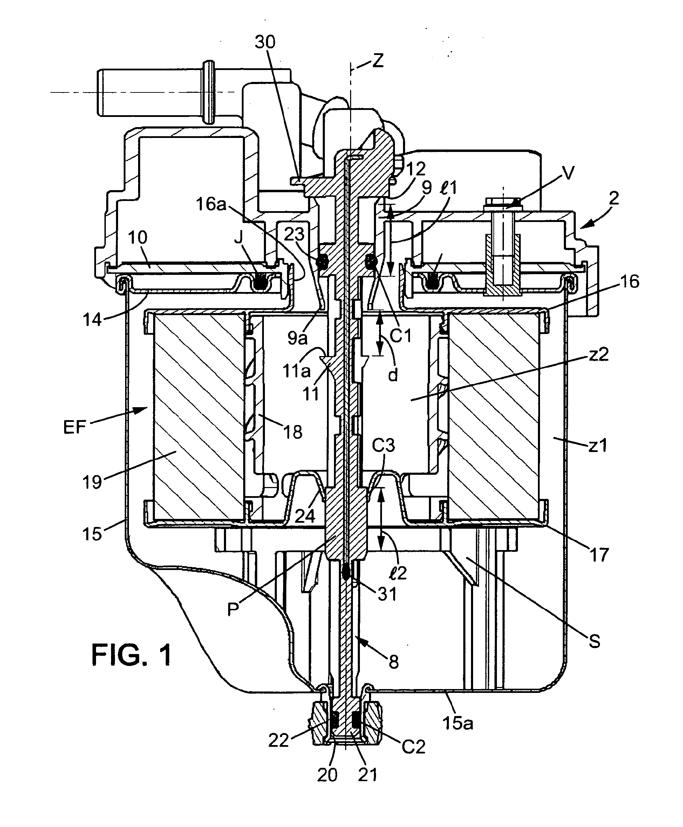

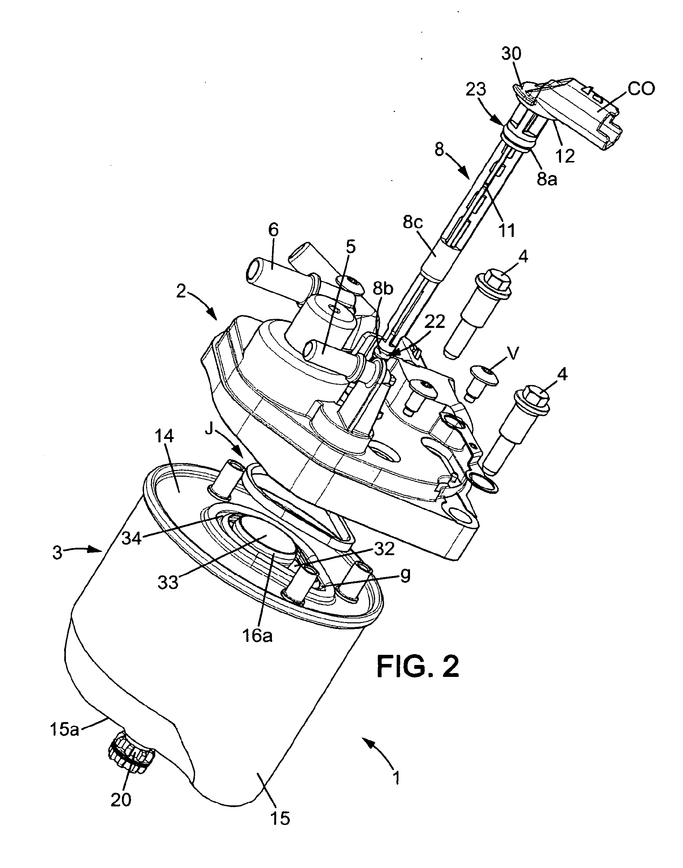

En référence aux figures 1 et 2, le filtre à carburant 1 comporte un support 2 réutilisable et une cartouche filtrante 3 jetable. Le support 2 est destiné à être attaché sur un véhicule via des organes de fixation 4 et à recevoir la cartouche filtrante 3. Le support 2 peut être réalisé en matière plastique et intègre deux conduits (5, 6) dont l'un forme une entrée de carburant et l'autre une sortie de carburant. Un système de recirculation ou plus généralement un quelconque dispositif réchauffeur du carburant circulant dans le filtre 1 est optionnellement prévu. Une sonde de température et/ou une sonde de pression (non représentées) peuvent également être montées dans le support 2.

Un obturateur axial appelé dans ce qui suit tige de purge 8 est supporté par le support 2 et réutilisable également. Un conduit de guidage 9 traversant formé dans une région centrale du support 2 permet de maintenir une orientation de la tige de purge 8 suivant une direction perpendiculaire à un plan défini par un disque inférieur 10 du support 2. Le support 2 comporte une partie fixe formée par le conduit de guidage 9, le disque inférieur 10 et d'autres composants s'étendant autour du conduit de guidage 9 et au-dessus du disque inférieur 10. Après le montage de la tige de purge 8, celle-ci doit être considérée comme faisant partie intégrante du support 2 et constitue une partie mobile par rapport à la partie fixe du support 2. La tige de purge 8 possède un degré de liberté en translation et peut être bloquée en rotation lors de son coulissement, par exemple par un système de guidage SG parallèle au conduit de guidage 9. Pour maintenir la tige de purge 8 dans une position fixe par rapport à la partie fixe du support, une structure de verrouillage par rotation ou déplacement hélicoïdal de la tige de purge 8 peut être prévue dans le support 2.

En référence à la figure 1, la tige de purge 8 comprend une ou plusieurs surfaces de butée 11a définies par exemple par des ergots 11 ou projections à rétrécissement de section en s'éloignant de la partie fixe du support 2. Le conduit de guidage 9 peut présenter une ouverture en vis-à-vis de la cartouche filtrante 3 dont le diamètre est rétréci. Le conduit de guidage 9 se termine ainsi par exemple par une cheminée conique fendue 9a. Ainsi, l'engagement des surfaces de butée 11a contre le conduit 9 empêche l'extraction de la tige de purge 8 par le haut. La butée 12 formée à l'extrémité supérieure de la tige de purge 8 empêche en outre l'extraction de la tige de purge par le bas. On comprend que les butées (11a, 12) disposées de part et d'autre du conduit de guidage 9 limitent le déplacement axial de la tige de purge 8. Le déplacement s'effectue au maximum sur une distance déterminée d qui est égale, dans l'exemple de la figure 1, à la différence entre l'écartement entre les butées (11a, 12) et la longueur du conduit 9. La partie fixe du support 2 et la tige de purge 8 constituent ainsi un support unitaire réutilisable.

En référence à la figure 2, la tige de purge 8 présente près de ses extrémités supérieure et inférieure des surfaces latérales (8a, 8b) destinées chacune à un contact étanche isolant l'intérieur du filtre de l'extérieur. Une surface latérale intermédiaire 8c est également prévue sur la tige de purge 8 pour assurer l'étanchéité entre le coté propre et le coté sale, comme cela sera décrit après. La tige de purge 8 permet donc de réaliser une triple étanchéité dans le filtre 1. Cette tige de purge 8 est constituée d'un unique obturateur, ce qui simplifie l'assemblage du filtre 1.

La cartouche filtrante 3 se fixe de façon amovible sur le support 2 à l'aide d'un couvercle 14 de liaison avec le support du filtre. Naturellement, la fixation peut également être réalisée par des organes de fixation situés en dehors du couvercle (14). La cartouche filtrante 3 peut comporter un boîtier (14, 15) de cartouche composé d'une cuve 15 et du couvercle 14. Un élément filtrant EF est logé dans le boîtier (14, 15), à distance du fond 14a de la cuve 15. Une structure S de soutien solidaire du fond 15a permet par exemple de maintenir l'élément filtrant EF dans une position rapprochée du couvercle 14. Comme cela est visible sur la figure 1, l'élément filtrant EF comporte un flasque supérieur 16, un flasque inférieur 17, un élément de canalisation 18 de forme sensiblement tubulaire et un média filtrant 19 disposé autour de l'élément de canalisation 18 et à travers lequel peut passer le carburant à filtrer. De façon connue en soi, le média filtrant 19 est interposé entre le flasque supérieur 16 et le flasque inférieur 17 et permet une séparation de l'eau par coalescence. Le média filtrant peut comporter une superposition de plusieurs couches dont une toile hydrophobe. De manière nullement limitative, ce média filtrant 19 présente typiquement une forme sensiblement annulaire. L'élément filtrant EF délimite alors une partie sale z1 et une partie propre z2. La partie sale z1 est remplie de gazole non filtré et d'eau et la partie propre z2 de gazole filtré et sans eau. L'eau, plus lourde que le gazole, descend par gravité au fond de la cuve 15.

Un canal de purge 20 s'étend à partir du fond 15a de la cuve 15 pour permettre de vider l'eau accumulée. L'élément filtrant EF présente un passage de traversée pour la tige de purge 8, qui est coaxial avec le canal de purge 20. Dans une configuration de fonctionnement du filtre à carburant, le canal de purge 20 est obturé par l'extrémité inférieure 21 de la tige de purge 8 qui forme à l'aide d'un joint torique 22 un bouchon pénétrant dans ce canal de purge 20. La tige de purge 8 occupe alors une position de fermeture, illustrée à la figure 1. Le canal de purge 20 présente une portée cylindrique s'étendant par exemple à partir du fond 15a jusqu'une extrémité libre inférieure. Pour la position de fermeture, l'extrémité inférieure 21 d'obturation du canal de purge 20 affleure par exemple le bord de cette extrémité libre.

Le couvercle de liaison 14 présente une ouverture 21 pour le passage de la tige de purge 8. Un joint d'étanchéité J est prévu autour de cette ouverture 21 pour rendre étanche la liaison support-couvercle. Une gorge g formée dans la surface supérieure du couvercle 14 permet de caler le joint J. Des vis V ou autres moyens peuvent permettre de fixer la cartouche filtrante 3 au support 2 et d'exercer une action de serrage entre la cartouche filtrante 2 et le support 2, de façon à ce que le joint J soit pressé axialement contre le disque 10.

Comme cela est visible sur la figure 1, une extrémité supérieure 16a du flasque supérieur 16 de l'élément filtrant EF peut faire saillie à travers l'ouverture 21. Lorsque la cartouche filtrante 3 est montée sur le support 2, un insert tubulaire, formé sur le disque inférieur 10 peut s'engager entre l'extrémité supérieure 16a et le bord du couvercle 14 délimitant l'ouverture 21. L'insert tubulaire est préférentiellement orienté parallèlement à la tige de purge 8, afin que ce mode de liaison participe au centrage de la tige de purge 8.

Dans un mode de réalisation, le carburant filtré sort de la cartouche filtrante 3 par un passage défini par une paroi tubulaire de l'extrémité supérieure 16 du flasque supérieur 16. Dans ce cas, on comprend que le côté propre z2 avec la sortie axiale de carburant doit être séparé de manière étanche du côté sale z1 alimenté par une entrée de carburant décalée par rapport à l'axe ou direction d'allongement Z de la tige de purge 8. Le mode de liaison permis par le couvercle 14 de la cartouche 3 n'entrave pas la liberté de mouvement axial et permet d'isoler de l'extérieur à la fois la zone de circulation du carburant non filtré et la zone de circulation du carburant filtré.

Dans le mode de réalisation illustré, la tige de purge 8 traverse le flasque supérieur 16 sans contact avec ce dernier et ne présente préférentiellement que deux zones de contact annulaire avec la cartouche filtrante 3 et une zone de contact annulaire avec la partie fixe du support 2. Plus précisément, lesdites surfaces latérales (8a, 8b, 8c) de la tige de purge 8 correspondent à trois diamètres d'étanchéité qui sont préférentiellement différents. La surface 8a est formée dans une partie élargie de la tige et présente le plus grand des trois diamètres. Cette surface 8a correspond par exemple à la surface externe d'un joint torique 23. La zone d'étanchéité tige-support ainsi définie entre la surface 8a et le conduit de guidage 9 du support 2 peut se déplacer le long de la paroi cylindrique du conduit de guidage lorsque la tige de purge 8 est déplacée pour dégager le canal de purge 20. La surface 8b présente le plus petit des trois diamètres et est par exemple formée par la surface externe du joint torique 22.

Dans la forme de réalisation des figures, la surface 8c est plus étendue axialement que les deux autres surfaces (8a, 8b) et présente un diamètre intermédiaire compris entre le petit et le grand diamètre. L'élément d'étanchéité définissant la surface 8c peut être formé directement par une portion cylindrique de la tige, préférentiellement en matière plastique, ou par un joint torique ou pièce similaire rapporté sur la tige de purge 8. Le flasque inférieur 17 présente une surface de guidage 24 sur laquelle vient s'appuyer la surface 8c. La surface 8c s'étend par exemple sur une portion cylindrique P de la tige de purge définie entre deux élargissements de section, comme illustré à la figure 1. Alternativement, cette étanchéité peut être obtenue en utilisant un joint torique ou un joint à lèvre supporté par le flasque inférieur 17. On comprend qu'on obtient une étanchéité à la fois au niveau du flasque supérieur 16 et au niveau du flasque inférieur 17. Aucune circulation depuis la partie sale z1, qui se trouve autour de l'élément filtrant EF dans le cas de la figure 1, n'est ainsi permise vers la partie propre z2 hormis via le média filtrant 19.

Dans le mode de réalisation préféré de l'invention, la zone d'étanchéité tige-flasque inférieur peut être déplacée axialement le long d'une paroi annulaire, de façon analogue à la zone d'étanchéité tige-support. Les longueurs (11, 12) pour les parois annulaires respectives sont chacune au moins égales à la distance d de débattement ou déplacement axial de la tige de purge 8.

Lors de l'assemblage de la cartouche filtrante 3 sur le support 2, la tige de purge 8 est insérée dans la cartouche filtrante 3 par le couvercle de liaison 14 et traverse l'élément filtrant EF puis pénètre pour finir le canal de purge 20. La zone d'étanchéité basse correspondant à la surface 8b de petit diamètre en contact avec le canal de purge 20 peut ainsi passer à travers la zone d'étanchéité moyenne de la cartouche filtrante 3 sans la toucher.

Egalement lors de l'assemblage du support 2 et en particulier lors de l'insertion de la tige de purge 8 à travers le conduit de guidage 9, la surface 8b de petit diamètre et la surface 8c de diamètre intermédiaire peuvent passer chacune à travers le conduit 9 sans frottement, sauf éventuellement au niveau de la cheminée conique 9a. On comprend aussi que les ergots de butée écartent les différentes parties de la cheminée conique 9a lors de l'insertion de la tige de purge 8 à travers le conduit de guidage 9. Ces différentes parties, du fait de leur élasticité, reprennent ensuite leur forme initiale.

Cette configuration permet ainsi d'absorber les tolérances dimensionnelles et d'assemblage des composants du filtre à carburant 1 pour réaliser une triple étanchéité par des joints toriques et/ou des contacts plastique/plastique. Les efforts de frottement et les blessures matière peuvent avantageusement être supprimés. L'assemblage est donc facilité et les étanchéités sont réalisées par une unique pièce d'obturation, sans nécessité de composants additionnels pour assister l'opération de purge du filtre à carburant 1.

Le fonctionnement du filtre 1 lors d'une opération de purge va à présent être brièvement expliqué.

Lorsque l'utilisateur souhaite purger le filtre à carburant 1, il déverrouille la tige de purge 8 en faisant pivoter d'un quart de tour une portion d'actionnement située du côté de l'extrémité supérieure. Par exemple, la tige de purge 8 peut être verrouillée sur la partie fixe du support 2 au moyen d'un système à baïonnette 30. L'utilisateur tire ensuite la tige de purge 8 axialement vers le haut afin de dégager le canal de purge 20. La forme de harpon des ergots 11 permet de limiter la distance d de débattement de la tige de purge 8. Pour permettre de chasser l'eau accumulée, la purge est réalisée par exemple en amenant du carburant, typiquement du gazole, au moyen d'une pompe d'amorçage, ou en en levant un tuyau d'arrivée de gazole afin de créer une mise à l'air. Pendant cette opération, les zones d'étanchéités intermédiaire et supérieure sont conservées grâce à la longueur respective (11, 12) des parois annulaires, par exemple cylindriques, où s'effectue le contact annulaire d'étanchéité (C1, C3) correspondant. Après avoir vidé l'eau de la cartouche filtrante 3, l'utilisateur abaisse la tige de purge 8 et la verrouille à nouveau dans sa position de fermeture.

Optionnellement, la tige de purge 8 peut embarquer un détecteur d'eau, par exemple électrique, permettant à l'utilisateur d'être informé de la nécessité de réaliser la purge de l'eau contenue dans la cartouche filtrante 3. Le détecteur d'eau comprend un capteur 31 qui est par exemple disposé entre la portion P et l'extrémité inférieure 21 qui forme le bouchon, c'est-à-dire au même niveau qu'une chambre d'accumulation d'eau de la cuve 15. Pour tenir compte du débattement de la tige de purge 8 et du fait que le capteur 31 doit se trouver à une distance suffisante du fond 15a de cuve 15, le flasque inférieur 17 peut présenter près de l'axe Z une forme en "cloche" ou toute autre forme permettant de surélever la surface 24 de guidage par rapport au reste du flasque inférieur 17. Cette disposition permet de positionner au mieux le capteur 31, tout en conservant une surface 8c suffisamment étendue pour conserver un contact étanche avec la surface 24 de guidage lors du déplacement axial de la tige de purge. Une connectique CO de liaison peut être prévue au niveau de l'extrémité supérieure de la tige de purge 8, pour permettre de relier le capteur 31 à une unité électronique de détection. Cette connectique CO peut s'étendre perpendiculairement à l'axe Z et en position adjacente au débouché du conduit de guidage 9 pour réduire l'encombrement en hauteur du filtre 1.

Un des avantages de l'invention réside dans la possibilité d'une réutilisation de la tige de purge 8 et d'une partie du filtre à carburant 1, de sorte que la cartouche filtrante 3 présente un moindre coût. Alors que toutes les pièces sont jetées avec un filtre à carburant conventionnel, il est permis de conserver un nombre important de fonctionnalités, parfois onéreuses.

Le mode d'assemblage de la cartouche filtrante 3 permet d'isoler de façon étanche les zones internes (Z1, Z2) qui communiquent l'une avec l'entrée et l'autre avec la sortie du filtre 1. L'assemblage est en outre ergonomique pour limiter l'encombrement en hauteur du filtre 1. Dans l'exemple non limitatif des figures, un seul joint J entoure l'entrée 32 et la sortie 33 de carburant de la cartouche 3, ce qui limite le nombre de pièces à manipuler lors de l'assemblage (quelques vis V et un joint J).

Il doit être évident pour les personnes versées dans l'art que la présente invention permet des modes de réalisation sous de nombreuses autres formes spécifiques sans l'éloigner du domaine d'application de l'invention comme revendiqué. En particulier, bien que la description mentionne quelques exemples pour la réalisation des zones d'étanchéité, l'homme du métier peut apprécier que toute autre forme de réalisation permettant d'obtenir une étanchéité annulaire coulissante convient pour la zone d'étanchéité tige-support et la zone d'étanchéité tige-flasque inférieur. L'illustration de portées cylindriques sur la tige de purge, sur des surfaces de guidage de la partie fixe du support 2 ou de la cartouche filtrante 3 n'est ainsi pas limitative et toute forme globalement annulaire de contact étanche peut être prévue avec la tige de purge 8.

## Revendications

1. Filtre à carburant (1) séparateur d'eau, comportant :
- une cuve (15) présentant un fond (15a), ledit fond présentant un orifice de purge (20) ;
- un support (2) présentant un conduit de guidage (9) ;
- une tige de purge (8) s'étendant suivant un axe (Z), ladite tige de purge présentant une extrémité (21) d'obturation et pouvant être déplacée suivant l'axe (Z) entre une position de fermeture dans laquelle l'extrémité (21) d'obturation obture l'orifice de purge (20) et une position de dégagement dans laquelle elle libère l'orifice de purge (20) ;
- un couvercle (14) relié de manière étanche à la cuve (15), le couvercle (14) présentant au moins une ouverture (34) pour le passage de la tige de purge (8) ;
- un élément filtrant (EF) disposé dans la cuve (15), à distance du fond (15a) de sorte à ménager une zone d'accumulation d'eau entre l'élément filtrant et le fond, ledit élément filtrant comportant un premier flasque (16), un deuxième flasque (17) et un média filtrant (19) sensiblement annulaire délimitant un passage et disposé entre le premier flasque (16) et le deuxième flasque (17) ;
filtre (1) dans lequel la cuve (15), le couvercle (14) et l'élément filtrant (EF) définissent une cartouche filtrante (3) reliée au support (2), la tige de purge (8) passant à travers le passage de l'élément filtrant (EF),
le deuxième flasque (17) présentant un passage délimité par une surface de guidage (24) et la tige de purge (8) présentant une zone d'étanchéité tige-flasque obturant le passage délimité par la surface de guidage (24) du deuxième flasque (17), ledit deuxième flasque étant plus proche du fond (15a) de la cuve (15) que le premier flasque (16), **caractérisé en ce que** :
- la tige de purge (8) présente une zone d'étanchéité tige-support obturant le conduit de guidage (9) ; et
- la cartouche filtrante (3) est maintenue de manière amovible sur le support (2) et la tige de purge (8) est apte à être extraite de la cartouche filtrante (3) par coulissement, lorsque la cartouche filtrante (3) est séparée du support (2).

2. Filtre selon la revendication 1, dans lequel la tige de purge (8) présente trois zones d'étanchéité (8a, 8b, 8c) incluant ladite zone d'étanchéité tige-support et ladite zone d'étanchéité tige-flasque, ainsi qu'une zone d'étanchéité entre l'extrémité (21) d'obturation de la tige de purge (8) et un canal de purge définissant l'orifice de purge (20), le passage délimité par la surface de guidage (24) étant coaxial avec le canal de purge, sur chaque zone d'étanchéité (8a, 8b, 8c) étant exercé un contact annulaire (C1, C2, C3) radial.

3. Filtre selon une des revendications 1 et 2, dans lequel le couvercle (14) est disposé à l'opposé du fond (15a), l'ouverture (34) du couvercle (14) étant entourée d'un joint d'étanchéité (J) prévu pour rendre étanche une liaison support-couvercle et traversée par une extrémité supérieure (16a) du premier flasque (16), dit supérieur, et/ou une paroi tubulaire du support (2), en contact avec le flasque supérieur (16) lorsque la cartouche filtrante (3) est montée sur le support (2).

4. Filtre selon une des revendications 1 à 3, dans lequel la surface de guidage (24) du deuxième flasque (17), dit inférieur, est disposée au dessus de la surface du flasque inférieur supportant le média filtrant (19), la tige de purge (8) comportant une sonde d'eau (31) disposé entre la zone d'étanchéité tige-flasque (8c) et ladite extrémité (21) d'obturation.

5. Filtre selon une des revendications 1 à 4, dans lequel la zone d'étanchéité tige-flasque est réalisée par une portion tronconique du deuxième flasque (17) coopérant avec une portée cylindrique de la tige de purge (8), le diamètre de la portion tronconique destinée au contact avec ladite portée cylindrique étant préférentiellement inférieur ou égal au diamètre de la portée cylindrique.

6. Filtre selon une des revendications 1 à 5, dans lequel ladite surface de guidage (24) du deuxième flasque (17) est formée d'un joint torique ou d'un joint à lèvre solidaire du flasque inférieur.

7. Filtre selon une des revendications 1 à 6, dans lequel la tige de purge (8) peut être déplacée suivant ledit axe (Z) relativement au support (2) et comprend des surfaces de butée opposées (11a, 12) pour limiter son déplacement sur une distance déterminée (d), chacune des zones d'étanchéité tige-support et tige-flasque pouvant être déplacée axialement le long d'une paroi annulaire d'extension axiale (11, 12) au moins égale à la distance déterminée (d).

8. Filtre selon une des revendications 1 à 7, dans lequel lorsque la cartouche filtrante (3) est montée sur ledit support (2), une zone (z1) en aval de la filtration est séparée d'une zone (z2) en amont de la filtration, au niveau d'un contact annulaire du deuxième flasque (17) contre un élément d'étanchéité (P) de la tige de purge (8) formant ladite zone d'étanchéité tige-flasque, ledit élément d'étanchéité (P) consistant préférentiellement en une portion cylindrique de la tige de purge (8) qui s'étend entre deux élargissements de section.

9. Filtre selon une des revendications 1 à 8, dans lequel le support (2) comporte l'un au moins des composants suivants :
- sonde de température ;
- sonde de pression ;
- dispositif réchauffeur (7).

10. Cartouche filtrante (3), adaptée pour coopérer dans un filtre (1) selon l'une des revendications 1 à 9, la cartouche filtrante comprenant un boîtier qui comporte une cuve (15) et un couvercle (14) reliés entre eux de manière étanche, un élément filtrant (EF) logé dans le boîtier (14, 15) et comprenant un média filtrant (19) sensiblement annulaire, la cuve présentant un fond (15a), l'élément filtrant (EF) étant disposé dans la cuve (15), à distance du fond (15a) de sorte à ménager une zone d'accumulation d'eau entre l'élément filtrant et le fond, ledit fond présentant un orifice de purge (20), le couvercle (14) présentant une ouverture opposée à l'orifice de purge et plus large que l'orifice de purge pour permettre le passage de la tige de purge dudit filtre, l'élément filtrant (EF) s'étendant autour d'un passage coaxial avec l'orifice de purge (20), lequel passage est plus large que l'orifice de purge et moins large que ladite ouverture du couvercle (14), **caractérisée en ce que** l'élément filtrant (EF) comprend un premier flasque (16) et un deuxième flasque (17) entre lesquels est interposé le média filtrant (19), le deuxième flasque présentant un passage délimité par une surface de guidage (24) et étant plus proche du fond (15a) de la cuve (15) que le premier flasque (16), et **en ce que** l'orifice de purge (20) et le passage délimité par ladite surface de guidage (24) sont adaptés pour être obturés par ladite tige de purge.

## Claims

1. Fuel filter (1) for separating water, comprising:
- a bowl (15) with a base (15a), said base having a purging orifice (20);
- a support (2) with a guide passage (9);
- a purging rod (8) extending along an axis (Z), said purging rod having a closure end (21) and being displaceable along the axis (Z) between a closed position in which the closure end (21) blocks the purging orifice (20) and a releasing position in which it releases the purging orifice (20);
- a cover (14) connected to the bowl (15) in a sealed manner, the cover (14) having at least one opening (34) for passing the purging rod (8) through;
- a filtering element (EF) disposed in the bowl (15) at a distance from the base (15a) so as to leave free a zone for water to accumulate between the filtering element and the base, said filtering element comprising a first flange (16), a second flange (17) and a substantially annular filtering medium (19) delimiting a passage and disposed between the first flange (16) and the second flange (17);
in which filter (1) the bowl (15), cover (14) and filtering element (EF) define a filter cartridge (3) connected to the support (2), and the purging rod (8) passes through the passage of the filtering element (EF),
the second flange (17) having a passage defined by a guide surface (24) and the purging rod (8) having a rod-flange sealing zone closing the passage defined by the guide surface (24) of the second flange (17), said second flange being closer to the base (15a) of the bowl (15) than the first flange (16), **characterised in that**:
- the purging rod (8) has a rod-support sealing zone closing the guide passage (9); and
- the filter cartridge (3) is retained on the support (2) in a detachable manner and the purging rod (8) is adapted to be withdrawn from the filter cartridge (3) in a sliding manner when the filter cartridge (3) is separated from the support (2).

2. Filter as claimed in claim 1, in which the purging rod (8) has three sealing zones (8a, 8b, 8c) including said rod-support sealing zone and said rod-flange sealing zone, as well as a sealing zone between the closure end (21) of the purging rod (8) and a purging passage defining the purging orifice (20), the passage defined by the guide surface (24) being coaxial with the purging passage, a radial annular contact (C1, C2, C3) being applied to each sealing zone (8a, 8b, 8c).

3. Filter as claimed in one of claims 1 and 2, in which the cover (14) is disposed opposite the base (15a), the opening (34) of the cover (14) being surrounded by a gasket (J) provided as a means of sealing a support-cover connection and through which a top end (16a) of the first, namely top, flange (16) extends, and/or a tubular wall of the support (2) in contact with the top flange (16) when the filter cartridge (3) is mounted on the support (2).

4. Filter as claimed in one of claims 1 to 3, in which the guide surface (24) of the second, namely bottom, flange (17) is disposed above the surface of the bottom flange supporting the filtering medium (19), the purging rod (8) having a water sensor (31) disposed between the rod-flange sealing zone (8c) and said closure end (21).

5. Filter as claimed in one of claims 1 to 4, in which the rod-flange sealing zone comprises a frustoconical portion of the second flange (17) cooperating with a cylindrical seating surface of the purging rod (8), the diameter of the frustoconical portion intended to sit in contact with said cylindrical seating surface preferably being smaller than or equal to the diameter of the cylindrical seating surface.

6. Filter as claimed in one of claims 1 to 5, in which said guide surface (24) of the second flange (17) is provided in the form of a toroidal sealing ring or a lip seal integral with the bottom flange.

7. Filter as claimed in one of claims 1 to 6, in which the purging rod (8) can be displaced along said axis (Z) relative to the support (2) and has opposing stop surfaces (11a, 12) to restrict its displacement across a given distance (d), the rod-support and rod-flange sealing zones each being axially displaceable along an axially extending annular wall (11, 12) by an amount at least equal to the given distance (d).

8. Filter as claimed in one of claims 1 to 7, in which, when the filter cartridge (3) is mounted on said support (2), a zone (z1) downstream of the filtration is separated from a zone (z2) upstream of the filtration on a level with an annular contact of the second flange (17) against a sealing element (P) of the purging rod (8) constituting said rod-flange sealing zone, said sealing element (P) preferably comprising a cylindrical portion of the purging rod (8) extending between two portions with a wider section.

9. Filter as claimed in one of claims 1 to 8, in which the support (2) incorporates at least one of the following components:
- a temperature sensor;
- a pressure sensor;
- a heating device (7).

10. Filter cartridge (3) designed to co-operate in a filter (1) as claimed in one of claims 1 to 9, the filter cartridge comprising a housing which comprises a bowl (15) and a cover (14) connected to one another in a sealed manner, a filtering element (EF) accommodated in the housing (14, 15) and comprising a substantially annular filtering medium (19), the bowl having a base (15a), the filtering element (EF) being disposed in the bowl (15) at a distance from the base (15a) so as to leave free a zone where water accumulates between the filtering element and the base, said base having a purging orifice (20), the cover (14) having an opening opposite the purging orifice and wider than the purging orifice to enable the purging rod of said filter to pass through, the filtering element (EF) extending around a passage coaxial with the purging orifice (20), which passage is wider than the purging orifice and less wide than said opening of the cover (14), **characterised in that** the filtering element (EF) comprises a first flange (16) and a second flange (17) between which the filtering medium (19) is disposed, the second flange having a passage delimited by a guide surface (24) and being closer to the base (15a) of the bowl (15) than the first flange (16), and **in that** the purging orifice (20) and the passage delimited by said guide surface (24) are adapted so that they are closed by said purging rod.

## Patentansprüche

1. Wasser abscheidender Kraftstoff-Filter (1), umfassend:
- eine Wanne (15), welche einen Boden (15a) aufweist, wobei der Boden eine Auslassöffnung (20) aufweist,
- eine Halterung (2), die einen Führungskanal (9) aufweist,
- eine Auslass-Stange (8), die sich längs einer Achse (Z) erstreckt, wobei die Auslass-Stange ein Verschluss-Ende (21) aufweist und längs der Achse (Z) zwischen einer Schließposition, in welcher das Verschluss-Ende (21) die Auslassöffnung (20) verschließt, und einer Freigabeposition verlagert werden kann, in welcher es die Auslassöffnung (20) freigibt,
- einen Deckel (14), der in dichter Weise mit der Wanne (15) verbunden ist, wobei der Deckel (14) wenigstens eine Öffnung (34) aufweist, für den Durchgang von der Auslass-Stange (8),
- ein Filterelement (EF), das in der Wanne (15) mit Abstand von dem Boden (15a) angeordnet ist, so dass ein Ansammlungsbereich für Wasser zwischen dem Filterelement und dem Boden entsteht, wobei das Filterelement einen ersten Flansch (16), einen zweiten Flansch (17) und ein im Wesentlichen ringförmiges Filtermedium (19) umfasst, das einen Durchgang begrenzt und zwischen dem ersten Flansch (16) und dem zweiten Flansch (17) angeordnet ist,
wobei bei dem Filter (1) die Wanne (15), der Deckel (14) und das Filterelement (EF) eine Filterkartusche (3) definieren, die mit der Halterung (2) verbunden ist, wobei die Auslass-Stange (8) durch den Durchgang des Filterelements (EF) hindurch verläuft,
wobei der zweite Flansch (17) einen Durchgang aufweist, der durch eine Führungsfläche (24) begrenzt ist, und wobei die Auslass-Stange (8) einen Dichtungsbereich Stange-Flansch aufweist, welcher den Durchgang verschließt, der durch die Führungsfläche (24) von dem zweiten Flansch (17) begrenzt ist, wobei der zweite Flansch näher an dem Boden (15a) von der Wanne (15) ist als der erste Flansch (16), **dadurch gekennzeichnet, dass**
- die Auslass-Stange (8) einen Dichtungsbereich Stange-Halterung aufweist, welcher den Führungskanal (9) verschließt, und
- die Filterkartusche (3) in beweglicher Weise an der Halterung (2) gehalten wird und die Auslass-Stange (8) dazu geeignet ist, gleitend aus der Filterkartusche (3) heraus genommen zu werden, wenn die Filterkartusche (3) von der Halterung (2) getrennt wird.

2. Filter nach Anspruch 1, wobei die Auslass-Stange (8) drei Dichtungsbereiche (8a, 8b, 8c) aufweist, welche den Dichtungsbereich Stange-Halterung und den Dichtungsbereich Stange-Flansch wie auch einen Dichtungsbereich zwischen dem Verschluss-Ende (21) von der Auslass-Stange (8) und einem Auslasskanal umfassen, der die Auslassöffnung (20) definiert, wobei der Durchgang, der durch die Führungsfläche (24) begrenzt ist, koaxial zu dem Auslasskanal ist, wobei auf jeden Dichtungsbereich (8a, 8b, 8c) ein radialer ringförmiger Kontakt (C1, C2, C3) ausgeübt wird.

3. Filter nach einem der Ansprüche 1 und 2, wobei der Deckel (14) dem Boden (15a) gegenüber angeordnet ist, wobei die Öffnung (34) des Deckels (14) von einer Dichtung (J) umgeben ist, die vorgesehen ist, um eine Verbindung Halterung-Deckel dicht zu machen, und die von einem oberen Ende (16a) von dem ersten Flansch (16) durchquert wird, der als oberer Flansch bezeichnet wird, oder/und einer rohrförmigen Wand der Halterung (2), in Kontakt mit dem oberen Flansch (16), wenn die Filterkartusche (3) an der Halterung (2) montiert ist.

4. Filter nach einem der Ansprüche 1 bis 3, wobei die Führungsfläche (24) von dem zweiten Flansch (17), der als unterer Flansch bezeichnet wird, über der Fläche von dem unteren Flansch angeordnet ist, der das Filtermedium (19) trägt, wobei die Auslass-Stange (8) eine Wasser-Sonde (31) umfasst, die zwischen dem Dichtungsbereich Stange-Flansch (8c) und dem Verschluss-Ende (21) angeordnet ist.

5. Filter nach einem der Ansprüche 1 bis 4, wobei der Dichtungsbereich Stange-Flansch dadurch realisiert ist, dass ein kegelstumpfförmiger Abschnitt von dem zweiten Flansch (17) mit einer zylindrischen Auflagefläche der Auslass-Stange (8) zusammen wirkt, wobei der Durchmesser des kegelstumpfförmigen Abschnitts, der zum Kontakt mit der zylindrischen Auflagefläche bestimmt ist, vorzugsweise kleiner oder gleich dem Durchmesser von der zylindrischen Auflagefläche ist.

6. Filter nach einem der Ansprüche 1 bis 5, wobei die Führungsfläche (24) von dem zweiten Flansch (17) aus einer torusförmigen Dichtung oder einer mit dem unteren Flansch fest verbundenen Dichtlippe gebildet ist.

7. Filter nach einem der Ansprüche 1 bis 6, wobei die Auslass-Stange (8) längs der Achse (Z) relativ zu der Halterung (2) bewegt werden kann und entgegengesetzte Anschlagflächen (11a, 12) umfasst, um ihre Bewegung auf einen bestimmten Abstand (d) zu beschränken, wobei jeder der Dichtungsbereiche Stange-Halterung und Stange-Flansch axial entlang von einer ringförmigen Wand mit einer axialen Abmessung (11, 12) bewegt werden kann, die wenigstens gleich dem bestimmten Abstand (d) ist.

8. Filter nach einem der Ansprüche 1 bis 7, wobei dann, wenn die Filterkartusche (3) an der Halterung (2) montiert ist, ein der Filterung nachgeschalteter Bereich (z1) von einem der Filterung vorgeschalteten Bereich (z2) getrennt ist, auf Höhe von einem ringförmigen Kontakt des zweiten Flansches (17) gegen ein Dichtungselement (P) von der Auslass-Stange (8), welches den Dichtungsbereich Stange-Flansch bildet, wobei das Dichtungselement (P) bevorzugt aus einem zylindrischen Abschnitt von der Auslass-Stange (8) besteht, der sich zwischen zwei Querschnittserweiterungen erstreckt.

9. Filter nach einem der Ansprüche 1 bis 8, wobei die Halterung (2) wenigstens eines der folgenden Bauteile umfasst:
- Temperatursonde,
- Drucksonde,
- Erwärmungseinrichtung (7).

10. Filterkartusche (3), die dazu ausgebildet ist, um in/mit einem Filter (1) gemäß einem der Ansprüche 1 bis 9 zusammen zu wirken, wobei die Filterkartusche ein Gehäuse umfasst, welches eine Wanne (15) und einen Deckel (14) umfasst, die miteinander in dichter Weise verbunden sind, wobei ein Filterelement (EF) in dem Gehäuse (14, 15) aufgenommen ist und ein im wesentlichen ringförmiges Filtermedium (19) umfasst, wobei die Wanne einen Boden (15a) aufweist, wobei das Filterelement (EF) in der Wanne (15) mit Abstand von dem Boden (15a) vorgesehen ist, so dass ein Ansammlungsbereich für Wasser zwischen dem Filterelement und dem Boden entsteht, wobei der Boden eine Auslassöffnung (20) aufweist, wobei der Deckel (14) eine Öffnung gegenüber von der Auslassöffnung aufweist, die größer ist als die Auslassöffnung, um den Durchgang von der Auslass-Stange von dem Filter zu erlauben, wobei das Filterelement (EF) sich um einen Durchgang herum erstreckt, der koaxial zu der Auslassöffnung (20) ist, wobei der Durchgang größer ist als die Auslassöffnung und kleiner als die Öffnung des Deckels (14), **dadurch gekennzeichnet, dass** das Filterelement (EF) einen ersten Flansch (16) und einen zweiten Flansch (17) umfasst, zwischen denen das Filtermedium (19) angeordnet ist, wobei der zweite Flansch einen Durchgang aufweist, der durch eine Führungsfläche (24) begrenzt ist, und der näher an dem Boden (15a) der Wanne (15) ist als der erste Flansch (16), und dadurch, dass die Auslassöffnung (20) und der Durchgang, der durch die Führungsfläche (24) begrenzt ist, dazu angepasst sind, um durch die Auslass-Stange verschlossen zu werden.
